# EUROPÄISCHE PATENTSCHRIFT

(11) **EP 3 277 971 B1**
(45) Veröffentlichungstag und Bekanntmachung des Hinweises auf die Patenterteilung: **23.10.2019**
(21) Anmeldenummer: 16711518.7
(22) Anmeldetag: 07.03.2016
(51) Int. Cl.: F16D 13/58, F16D 13/75, F16D 13/70

(54) **REIBKUPPLUNG MIT EINER ROTATIONSACHSE ZUM LÖSBAREN VERBINDEN EINER ABTRIEBSWELLE MIT EINEM VERBRAUCHER**
FRICTION CLUTCH WITH A ROTATIONAL AXIS FOR RELEASABLY CONNECTING AN OUTPUT SHAFT TO A LOAD
EMBRAYAGE À FRICTION COMPRENANT UN AXE DE ROTATION SERVANT À RELIER DE MANIÈRE AMOVIBLE UN ARBRE DE SORTIE À UN CONSOMMATEUR

(30) Priorität: 02.04.2015 DE 102015206019; 17.08.2015 DE 102015215606
(43) Veröffentlichungstag der Anmeldung: 07.02.2018
(73) Patentinhaber: Schaeffler Technologies AG & Co. KG, 91074 Herzogenaurach (DE)
(72) Erfinder: DANNHÄUSER, Matthias, 76534 Baden-Baden (DE)
(86) Internationale Anmeldenummer: PCT/DE2016/200121
(87) Internationale Veröffentlichungsnummer: WO 2016/155717

(56) Entgegenhaltungen:
- EP-A2- 2 843 252
- WO-A1-2009/039813
- WO-A1-2013/186043
- WO-A1-2015/081949
- DE-A1-102011 087 066
- DE-A1-102012 218 876
- DE-A1-102012 219 068
- DE-A1-102013 214 372
- DE-A1-102014 215 922
- DE-C1- 19 535 712
- DE-T1- 19 980 244

## Beschreibung

Die Erfindung betrifft eine Reibkupplung mit einer Rotationsachse zum lösbaren Verbinden einer Abtriebswelle mit einem Verbraucher, sowie einen Antriebsstrang, insbesondere für ein Kraftfahrzeug. Die hier vorgeschlagene Reibkupplung weist eine Servofeder auf, wobei die Servofeder sich vor allem dadurch kennzeichnet, dass die Auflagezunge und die Zentrierzunge durch separate Komponenten gebildet sind, wobei bevorzugt die Auflagezunge im Einbau auf einem Außenradius angeordnet ist und die Zentrierzunge auf einem Innenradius angeordnet ist, wobei der Außenradius größer als der Innenradius ist. Gemäß einem weiteren Aspekt der Erfindung wird eine Reibkupplung mit einem Kupplungsdeckel vorgeschlagen, wobei der Kupplungsdeckel sich dabei vor allem dadurch kennzeichnet, dass die Auflagererhebung mittels einer Sicke mit einem Auflageradius gebildet ist, wobei bevorzugt der Auflageradius geringer als die Dicke des Materials des Kupplungsdeckels ist.

Eine Reibkupplung ist dazu eingerichtet, ein Drehmoment lösbar von einer Abtriebswelle auf einen Verbraucher und umgekehrt zu übertragen. Dies wird in der Regel über zumindest ein Reibpaket erreicht, welches eine axial verschiebbare, in der Regel mit der Abtriebswelle rotationsfeste, Anpressplatte aufweist, welche so gegen zumindest eine korrespondierende Reibscheibe pressbar ist. Infolge der Anpresskraft ergibt sich eine Reibkraft über die Reibfläche, welche multipliziert mit dem mittleren Radius der Reibfläche ein übertragbares Drehmoment ergibt. Zum Anpressen oder zum Ausrücken der Anpressplatte wird in der Regel eine Tellerfeder eingesetzt. Aus dem Stand der Technik sind Reibkupplungen bekannt, welche eine Servofeder aufweisen. Die Servofeder ist in der Regel im Innenbereich zwischen einem Kupplungsdeckel und einer Tellerfeder der Reibkupplung positioniert. Wenn verschleißbedingt der Einrückweg für die Anpressplatte länger wird, weil zum Beispiel die Reibscheibe an Materialdicke verliert, stellt sich in der Kupplungsdruckplatte die Tellerfeder stärker auf. Dadurch erhöht sich die Betätigungskraft zum Ausrücken, was zu einer unerwünschten spürbaren Erhöhung der Pedalkraft führt. Die zusätzliche Servofeder hält eine Gegenkraft zur Tellerfederkraft vor, welche im Verschleißzustand auf die Tellerfeder einwirkt. Die Servofeder wird dabei in der Regel derart positioniert, dass sie im Neuzustand (ohne Verlängerung des Einrückwegs der Anpressplatte) keine oder nur eine geringe Gegenkraft auf die Tellerfeder ausübt. Erst ab einem vorbestimmten (verschleißbedingten) Aufstellwinkel der Tellerfeder kommt die Servofeder derart an der Tellerfeder zur Anlage, dass mittels der resultierenden Servo-Gegenkraft die Zunahme der Tellerfederkraft zumindest teilweise kompensiert wird.

Aus der DE 10 2013 214 372 A1 ist eine Reibkupplung bekannt, die auf den Oberbegriff des Patentanspruchs 1 lesbar ist.

Die bisher eingesetzten Reibkupplungen mit Servofedern weisen verschiedene Nachteile auf, die durch den Patentanspruch 1 gelöst werden. Bevorzugte Ausführungsbeispiele sind in den abhängigen Patentansprüchen dargelegt.

Die Erfindung betrifft eine Reibkupplung mit Servofeder, wobei die Servofeder zumindest die folgenden Komponenten aufweist:
- einen Federabschnitt zum Vorhalten einer Servokraft für eine Tellerfeder;
- eine Widerlagerzunge zur Anlage an einem axialen Widerlager der Reibkupplung;
- einen Kontaktbereich zum Kontakt mit einer Tellerfeder zum Übertragen der Servokraft auf die besagte Tellerfeder;
- eine Auflagezunge zur Auflage auf einem Gegenlager zur axialen Wegbegrenzung; und
- eine Zentrierzunge zum Zentrieren der Servofeder in einer Reibkupplung. Die Servofeder kennzeichnet sich vor allem dadurch, dass die Auflagezunge und die Zentrierzunge durch separate Komponenten gebildet sind, wobei bevorzugt die Auflagezunge im Einbau auf einem Außenradius angeordnet ist und die Zentrierzunge auf einem Innenradius angeordnet ist, wobei der Außenradius größer als der Innenradius ist.

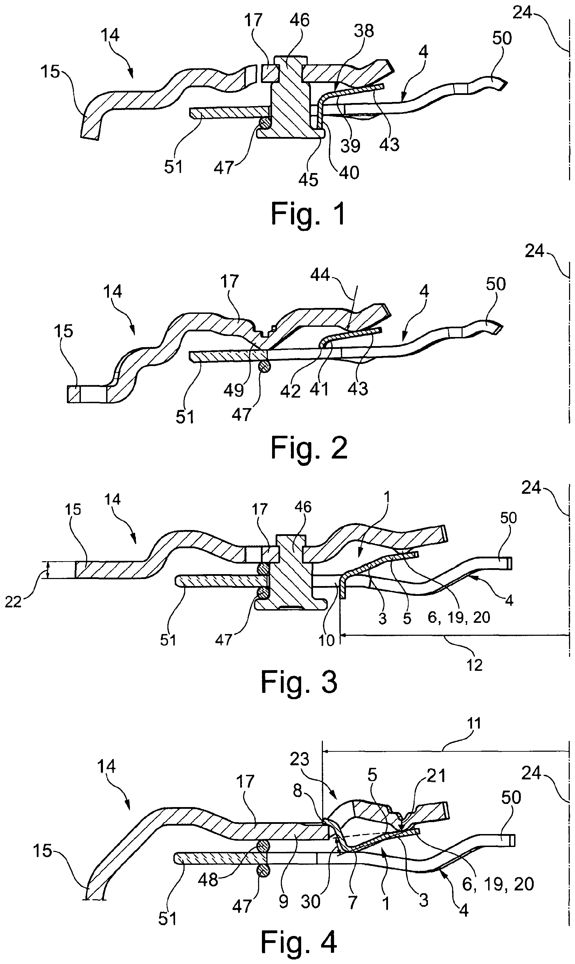

Gemäß dem Stand der Technik wird die Servofeder mittels Auflagezungen axial auf einem Gegenlager eines Stufenbolzens gelagert, welches durch einen seitlichen Vorsprung gebildet ist. Diese Abstützung ist während der Montage, sowie im ausgerückten Zustand der Kupplung erforderlich, um die (nahezu kraftfreie) Servofeder in Position zu halten oder die Übertragung der Servokraft auf die Tellerfeder axial zu begrenzen. Die gleichen Auflagezungen, welche das Bauteil in axialer Position halten, dienen auch zur Zentrierung der Servofeder. Sie werden hier daher als Zentrier-Auflagezungen bezeichnet. Hierzu sind in der Tellerfeder Zentrierfenster vorgesehen, durch welche die Zentrier-Auflagezungen hindurchtauchen und dort an dem Stufenbolzen radial anliegen. Eine solche Servofeder ist beispielhaft in der Fig. 1 dargestellt.

Aufgrund der bauraumtechnischen Verhältnisse, ist die ebene Auflagefläche am Bolzenkopf des Tellerfeder-Zentrierbolzens in radialer Richtung begrenzt. Weil sich die Servofeder bei einer Zunahme (oder bei einer nachstellbaren Reibkupplung bei einer Verlagerung) des Einrückwegs weiter vorspannt, bewegen sich die Auflagezungen dann radial in Richtung Stufenbolzen. So entsteht eine kinematische Situation, bei welcher sich die Auflagezungen stetig im Grenzbereich von Innenkante zu Außenkante der Auflagefläche des Bolzenkopfs befinden. Unter Berücksichtigung der Fertigungstoleranzen, Zentriertoleranzen und Montagetoleranzen wird damit die Funktionsweise der Servofeder eingeschränkt, um zum Beispiel ein Abrutschen von der Auflagefläche des Bolzenkopfs oder Anstehen am Bolzenbund über die gesamte Lebensdauer der Reibkupplung sicher zu vermeiden.

Die Servofeder ist bevorzugt als geschlossener Ring ausgebildet und weist jeweils eine Mehrzahl der jeweiligen Zungen, wie sie im Folgenden beschrieben werden, auf. Alternativ dazu ist die Servofeder als einzelnes Hebelelement ausgebildet, wobei bevorzugt eine Mehrzahl von Hebelelementen, bevorzugt gleichmäßig über den Umfang verteilt, in einer Reibkupplung eingesetzt werden. Ein solches Hebelelement weist zumindest eine Zunge jeden Zungentyps auf.

Die hier vorgeschlagene Servofeder weist einen Federabschnitt auf. Der Federabschnitt ist dabei bevorzugt aus einem Federstahl gebildet und hält eine Servokraft für eine Tellerfeder vor. Bevorzugt ist der Federabschnitt von radial innen nach radial außen geneigt ausgebildet, sodass die elastische Servokraft bei einem Verändern der Neigung abgegeben wird. Hierzu ist an einem Ende des Federabschnitts, bevorzugt radial innen, eine Widerlagerzunge vorgesehen, mittels welcher die Servofeder axial gelagert ist. Hierzu liegt die Servofeder mit der Widerlagerzunge an einem axialen Widerlager der Reibkupplung an, wobei das axiale Widerlager bevorzugt von einem Kupplungsdeckel der Reibkupplung gebildet wird. Eine Servofeder weist dabei eine oder mehrere Widerlagerzungen auf.

Weiterhin weist die Servofeder einen Kontaktbereich auf, mittels welcher die Servofeder in axial entgegengesetzter Richtung zu der Widerlagerzunge zumindest zeitweise an der Tellerfeder anliegt. Bei einem Kontakt mit der Tellerfeder wird die Servokraft auf die besagte Tellerfeder übertragen. Um den möglichen axialen Weg der Servofeder zu begrenzen, beziehungsweise die Servofeder auch dann an ihrer axialen Position zu halten, wenn kein Kontakt zu der besagten Tellerfeder besteht, ist weiterhin eine Auflagezunge vorgesehen. Diese ist dazu eingerichtet, zumindest zeitweise auf einem Gegenlager aufzuliegen und so den maximalen axialen Weg der Servofeder zu begrenzen. Um die Servofeder auch radial sicher zu positionieren, ist weiterhin eine Zentrierzunge vorgesehen. Im Einbau in einer Reibkupplung sind bei einer einzigen ringförmigen Servofeder oder mehreren gemeinsam einen Ring bildenden Servofedern jeweils eine Mehrzahl von Auflagezungen und Zentrierzungen vorgesehen.

Die hier vorgeschlagene Servofeder unterscheidet sich vom Stand der Technik vor allem dadurch, dass die Auflagezunge und die Zentrierzunge durch separate Komponenten gebildet sind. Damit wird das Auslegungsdilemma der begrenzten Erstreckung der Auflagefläche des Bolzenkopfs aufgehoben. In einem bevorzugten Ausführungsbeispiel wird die Zentrierzunge im Einbau in einer Reibkupplung an einem Tellerfeder-Zentrierbolzen oder einem, zum Beispiel einstückig mit einem Kupplungsdeckel gebildeten, Tellerfeder-Haken radial angelegt, umso die Servofeder zu zentrieren. Die Auflagezunge liegt im Einbau bevorzugt auf einem Vorsprung eines Kupplungsdeckels auf. Das so gebildete Gegenlager ist mittels einer von der Tellerfeder wegweisenden Fläche gebildet. Besonders bevorzugt ist das Gegenlager von einer vom Kupplungsraum wegweisenden Außenseite (Rückseite) des Kupplungsdeckels gebildet und ein Zugang für die Auflagezunge durch einen Durchbruch im Kupplungsdeckel ermöglicht.

Weiterhin ist bevorzugt die Auflagezunge im Einbau auf einem Außenradius angeordnet und die Zentrierzunge auf einem Innenradius angeordnet, wobei der Außenradius größer als der Innenradius ist. Bei einer Version, bei welcher der Kupplungsdeckel das axiale Gegenlager und das axiale Widerlager bildet, sind das Gegenlager und das axiale Widerlager entsprechend auf dem Außenradius beziehungsweise dem Innenradius korrespondierend zu der eingesetzten Servofeder angeordnet. Bei einer entsprechenden Anordnung des Kontaktbereichs der Servofeder bleibt die Federkennlinie der Servofeder mit einer vorbekannten Servofeder identisch.

Gemäß einem weiteren Aspekt der Erfindung wird eine Servofeder für eine Reibkupplung vorgeschlagen, wobei die Servofeder zumindest die folgenden Komponenten aufweist:
- einen Federabschnitt zum Vorhalten einer Servokraft für eine Tellerfeder;
- eine Widerlagerzunge zur Anlage an einem axialen Widerlager der Reibkupplung;
- einen Kontaktbereich zum Kontakt mit einer Tellerfeder zur Übertragung der Servokraft auf die besagte Tellerfeder;
- eine Auflagezunge zur Auflage auf einem Gegenlager zur axialen Wegbegrenzung; und
- eine Zentrierzunge zum Zentrieren der Servofeder in einer Reibkupplung,
wobei die Servofeder aus einem Blechmaterial, bevorzugt aus Federstahl, gebildet ist. Die Servofeder kennzeichnet sich vor allem dadurch, dass der Kontaktbereich ein Blechende aufweist, wobei das Blechende im Einbau zumindest in einem kraftlosen Zustand von der besagten Tellerfeder weg gerichtet ist.

Der Auflageradius der Servofeder auf der Haupttellerfeder ist im Stand der Technik durch die Materialdicke der Servofeder begrenzt. Die Materialdicke von Servofedern in diesem Kupplungskonzept liegt bei etwa 1 mm [Millimeter]. Daher ist der Auflageradius gemäß dieser Konstruktion niemals wesentlich größer als 0,5 mm. Diese graben sich über die Lebensdauer der Tellerfeder ein, weil ein erhöhter Materialverschleiß infolge der hohen Flächenlast an der Kontaktstelle auftritt. Dies führt zu einer ansteigenden Ausrückkrafthysterese, beziehungsweise Einrückkrafthysterese. Zusätzlich werden die Bauteile durch eine Eingrabung der Servofeder in die Tellerfeder entstehenden Formschluss an den Kontaktstellen stärker beansprucht.

Die Servofeder ist bevorzugt als geschlossener Ring ausgebildet und weist jeweils eine Mehrzahl der jeweiligen Zungen, wie sie im Folgenden beschrieben werden, auf. Alternativ dazu ist die Servofeder als einzelnes Hebelelement ausgebildet, wobei bevorzugt eine Mehrzahl von Hebelelementen, bevorzugt gleichmäßig über den Umfang verteilt, in einer Reibkupplung eingesetzt werden. Ein solches Hebelelement weist zumindest eine Zunge jeden Zungentyps auf.

Die hier vorgeschlagene Servofeder weist einen Federabschnitt auf. Der Federabschnitt ist dabei bevorzugt aus einem Federstahl gebildet und hält eine Servokraft für eine Tellerfeder vor. Bevorzugt ist der Federabschnitt von radial innen nach radial außen geneigt ausgebildet, sodass die elastische Servokraft bei einem Verändern der Neigung abgegeben wird. Hierzu ist an einem Ende des Federabschnitts, bevorzugt radial innen, eine Widerlagerzunge vorgesehen, mittels welcher die Servofeder axial gelagert ist. Hierzu liegt die Servofeder mit der Widerlagerzunge an einem axialen Widerlager der Reibkupplung an, wobei das axiale Widerlager bevorzugt von einem Kupplungsdeckel der Reibkupplung gebildet wird. Eine Servofeder weist dabei eine oder mehrere Widerlagerzungen auf.

Weiterhin weist die Servofeder einen Kontaktbereich auf, mittels welcher die Servofeder in axial entgegengesetzter Richtung zu der Widerlagerzunge zumindest zeitweise an der Tellerfeder anliegt. Bei einem Kontakt mit der Tellerfeder wird die Servokraft auf die besagte Tellerfeder übertragen. Um den möglichen axialen Weg der Servofeder zu begrenzen, beziehungsweise die Servofeder auch dann an ihrer axialen Position zu halten, wenn kein Kontakt zu der besagten Tellerfeder besteht, ist weiterhin eine Auflagezunge vorgesehen. Diese ist dazu eingerichtet, zumindest zeitweise auf einem Gegenlager aufzuliegen und so den maximalen axialen Weg der Servofeder zu begrenzen. Um die Servofeder auch radial sicher zu positionieren, ist weiterhin eine Zentrierzunge vorgesehen. Im Einbau in einer Reibkupplung sind bei einer einzigen ringförmigen Servofeder oder mehreren gemeinsam einen Ring bildenden Servofedern jeweils eine Mehrzahl von Auflagezungen und Zentrierzungen vorgesehen.

Die hier vorgeschlagene Servofeder unterscheidet sich vom Stand der Technik vor allem dadurch, dass der Kontaktbereich ein Blechende aufweist, welches selbst nicht auf der Tellerfeder aufliegt. Vielmehr ist das Blechende im Einbau zumindest in einem kraftlosen Zustand, bevorzugt in jedem auslegungsgemäßen Betriebszustand, von der besagten Tellerfeder weg gerichtet. Der Kontaktbereich außen wird entschärft, indem die Servofeder, anstatt mit dem Blechende, über eine gebildete Kuppe mit der Tellerfeder in Kontakt steht. Dadurch kann der Auflageradius von nach obigem Beispiel 0,5 mm [Millimeter] auf einen wesentlich größeren Wert erhöht werden. Die Hertz'sche Pressung zwischen den Bauteilen wird deutlich kleiner, so dass Eingrabungen und Hystereseeffekte minimiert werden können.

Das Blechende ist eine offene Blechkante, welche beim Fertigen, zum Beispiel beim Stanzen, der Servofeder entsteht. Das Blechende ist von einer oberen und einer unteren Kante begrenzt und weist eine Höhe von in etwa der Blechdicke des verwendeten Blechmaterials auf. Die obere und untere Kante verbinden das Blechende und die radiale Fläche der Servofeder, wobei bei einer konstanten Blechdicke die Kanten zum Beispiel jeweils einen Winkel von etwa 90 ° aufweisen. Die obere und untere Kante können jeweils abgerundet, aber auch scharfkantig sein, weil sie nicht zur Auflage auf der Tellerfeder eingerichtet sind. Das weggeneigte Blechende ist mittels eines Biegeradius weg gerichtet, wobei die Servofeder bei dem Biegeradius eine Kontaktfläche ausbildet. Die Kontaktfläche ist dabei mittels eines entsprechenden Biegeradius derart einrichtbar, dass im Betrieb eine Flächenpressung auf ein zulässiges Maximum begrenzt ist. Bevorzugt ist das Blechende in jedem auslegungsgemäßen Betriebszustand nicht mit der Tellerfeder im (kraftübertragenden) Kontakt.

Gemäß einem weiteren Aspekt der Erfindung wird ein Kupplungsdeckel für eine Reibkupplung vorgeschlagen, wobei der Kupplungsdeckel zumindest die folgenden Komponenten aufweist:
- einen Anbindungsabschnitt zum axialen Fixieren des Kupplungsdeckels mit einem axial fixierten mitrotierenden Bauteil einer Reibkupplung;
- einen Widerlagerabschnitt zur Aufnahme einer axialen Anpresskraft und Betätigungskraft für ein drehmomentübertragendes Reibpaket, wobei der Widerlagerabschnitt eine Auflagererhebung aufweist, wobei die Auflagererhebung zur Auflage einer Widerlagerzunge einer Servofeder eingerichtet ist,
wobei der Kupplungsdeckel aus einem Blechmaterial, bevorzugt durch Kaltumformen, gebildet ist. Der Kupplungsdeckel kennzeichnet sich dabei vor allem dadurch, dass die Auflagererhebung mittels einer Sicke mit einem Auflageradius gebildet ist, wobei bevorzugt der Auflageradius geringer als die Dicke des Materials des Kupplungsdeckels ist.

Der Kupplungsdeckel ist dazu eingerichtet einen Kupplungsraum einseitig axial, bevorzugt getriebeseitig, und bevorzugt zumindest anteilig radial, abzuschließen. Der Anbindungsabschnitt ist dabei dazu eingerichtet, in einem montierten Zustand axial mit einer Schwungscheibe oder einer Gegenplatte, welche auch als Zentralsteg ausgeführt sein kann, eine Anbindung zu realisieren. Über diese Anbindung ist bevorzugt ein Drehmoment übertragbar und zudem eine axiale Anpresskraft übertragbar. Gemäß einer Ausführungsform weist der Anbindungsabschnitt einen Wandabschnitt auf, wobei sich der Wandabschnitt axial erstreckt und hierfür einen ausreichenden Durchmesser für die innenliegenden Reibelemente einer Reibkupplung aufweist. Bevorzugt weist der Wandabschnitt eine innenliegende Verzahnung auf, mittels welcher eine oder mehrere Anpressplatten axial verschiebbar gelagert sind, wobei über die Verzahnung zugleich ein Drehmoment übertragbar ist. Besonders bevorzugt bildet der Wandabschnitt zudem einen Berstabschnitt, welcher zum Zurückhalten von sich in einem Fehlerfall lösenden und der Fliehkraft folgenden Komponenten der Reibkupplung, wie zum Beispiel Pendelmassen eines Fliehkraftpendels, eingerichtet ist, um Schaden an umgrenzenden Bauteilen zu vermeiden oder zu minimieren.

Der Widerlagerabschnitt ist dazu eingerichtet, eine Anlage beziehungsweise ein Widerlager für eine Betätigungseinrichtung, zum Beispiel eine Tellerfeder, zu bilden. Weiterhin weist der Widerlagerabschnitt eine Auflagererhebung für eine Servofeder auf, welche zur Ausübung ihrer Funktion über diese Auflagererhebung verkippbar ist. Der Kupplungsdeckel ist besonders kostengünstig aus einem Blechmaterial herstellbar. Allerdings werden für die axialen Kräfte entsprechend große Blechdicken benötigt. Der Auflageradius der Auflagererhebung wird derzeit über einen umlaufenden Ziehradius, mittels Tiefziehen oder Prägen, realisiert. Dieser Auflageradius ergibt sich aus den Mindestabmessungen des Werkzeugstempels, sowie der Materialdicke des Kupplungsdeckels. Dies bedeutet, dass derzeit beispielsweise bei einer Blechdicke von 4,5 mm [Millimeter] ein Auflageradius von 7 mm entsteht, welcher dem resultierenden Abrollradius der Servofeder entspricht. Je größer der Abrollradius ist, desto stärker ändert sich der Hebelarm zwischen den Krafteinleitungsstellen Widerlager und Kontaktende der Servofeder. Bei zunehmendem Verschleiß der Reibscheibe, und damit zunehmender Verkippung der Servofeder, bedeutet dies eine Reduktion des Hebelarmes und damit eine kürzere Servofederkennlinie. Aus dem großen Abrollweg resultiert zudem eine hohe Toleranz der Kennlinienlänge und auch der Kraftwerte. Dies führt zu einer erschwerten Abstimmung bei der Kompensation der Zunahme der Tellerfederkraft infolge der verschleißbedingten Aufstellung der Tellerfeder, weil hierfür eine lange Servofederkennlinie sowie kleine Wegtoleranzen und kleine Krafttoleranzen erforderlich sind.

Im Unterschied zum Stand der Technik ist die Auflagererhebung nicht mittels Prägen beziehungsweise Tiefziehen erzeugt, sondern durch eine Sicke gebildet. Durch Prägen beziehungsweise Tiefziehen, bei welchen das Formwerkzeug auf der Erhebungsinnenseite eingesetzt wird, entsteht ein Auflageradius von zumindest, in der Regel einem Mehrfachen, der Blechdicke. Die Sicke hingegen ist mit einem zweiseitigen Werkzeug gebildet, womit sich eine Auflagererhebung mit einem besonders kleinen Auflageradius und einem kurzen Abrollradius ausbilden lässt. Insbesondere ist der Auflageradius kleiner als die Blechdicke des Kupplungsdeckels. Beispielsweise bei einer Blechdicke von 4,5 mm [Millimeter] ist ein Auflageradius von 3 mm oder weniger, bevorzugt 2,5 mm, erreichbar. Damit wird das Wandern der Servofeder deutlich reduziert, aber zugleich ist ein kostengünstiges Fertigungsverfahren mit vernachlässigbarem thermischem Einfluss einsetzbar. Somit ist die Servofeder kürzer beziehungsweise eine Vorrichtung zum Zentrieren oder eine Vorrichtung für den Kontakt mit einer Tellerfeder entsprechend kleiner auslegbar, weil die Veränderung der Lage der Servofeder abhängig vom Verkippungswinkel verringert ist. Hierdurch kann zusätzlicher Bauraum gewonnen werden. Besonders bevorzugt ist der Kupplungsdeckel für eine Servofeder gemäß der obigen Beschreibung eingerichtet.

Darüber hinaus dient in einer bevorzugten Ausführungsform der Widerlagerabschnitt zur (radialen) Versteifung eines Wandabschnitts gemäß der obigen Beschreibung. Bevorzugt begrenzt der Widerlagerabschnitt in einem montierten Zustand einen Kupplungsraum einer Reibkupplung axial. In einer Ausführungsform ist der Kupplungsdeckel mehrteilig gebildet, bevorzugt ist der Kupplungsdeckel einteilig gebildet.

Gemäß einem weiteren Aspekt der Erfindung wird ein Kupplungsdeckel für eine Reibkupplung vorgeschlagen, wobei der Kupplungsdeckel zumindest die folgenden Komponenten aufweist:
- einen Anbindungsabschnitt zum axialen Fixieren des Kupplungsdeckels mit einem axial fixierten mitrotierenden Bauteil einer Reibkupplung;
- einen Widerlagerabschnitt zur Aufnahme einer axialen Anpresskraft und Betätigungskraft für ein drehmomentübertragendes Reibpaket. Der Kupplungsdeckel kennzeichnet sich dabei vor allem dadurch, dass weiterhin ein Gegenlager zur axialen Wegbegrenzung für eine Servofeder mit zumindest einer Auflagezunge nach der obigen Beschreibung gebildet ist, wobei das Gegenlager bevorzugt mittels eines Durchbruchs in dem Widerlagerabschnitt gebildet ist.

Der Kupplungsdeckel ist dazu eingerichtet einen Kupplungsraum einseitig axial, bevorzugt getriebeseitig, und bevorzugt zumindest anteilig radial, abzuschließen. Der Anbindungsabschnitt ist dabei dazu eingerichtet, in einem montierten Zustand axial mit einer Schwungscheibe oder einer Gegenplatte, welche auch als Zentralsteg ausgeführt sein kann, eine Anbindung zu realisieren. Über diese Anbindung ist bevorzugt ein Drehmoment übertragbar und zudem eine axiale Anpresskraft übertragbar. Gemäß einer Ausführungsform weist der Anbindungsabschnitt einen Wandabschnitt auf, wobei sich der Wandabschnitt axial erstreckt und hierfür einen ausreichenden Durchmesser für die innenliegenden Reibelemente einer Reibkupplung aufweist. Bevorzugt weist der Wandabschnitt eine innenliegende Verzahnung auf, mittels welcher eine oder mehrere Anpressplatten axial verschiebbar gelagert sind, wobei über die Verzahnung zugleich ein Drehmoment übertragbar ist. Besonders bevorzugt bildet der Wandabschnitt zudem einen Berstabschnitt, welcher zum Zurückhalten von sich in einem Fehlerfall lösenden und der Fliehkraft folgenden Komponenten der Reibkupplung, wie zum Beispiel Pendelmassen eines Fliehkraftpendels, eingerichtet ist, um Schaden an umgrenzenden Bauteilen zu vermeiden oder zu minimieren.

Gemäß einer Ausführungsform weist der Kupplungsdeckel die Eigenschaften des vorhergehend beschriebenen Kupplungsdeckels auf.

Die axiale Positionierung der Servofeder(n) während der Montage und im ausgerückten Zustand wird über eine oder mehrere Auflagezungen, bevorzugt drei Auflagezungen, gewährleistet, welche an einem Gegenlager des Kupplungsdeckels aufliegen. Das Gegenlager ist dabei nicht von einem Zentrierbolzen oder Deckelhaken im Innenraum der Reibkupplung gebildet, sondern rückseitig, also auf jener der Tellerfeder abgekehrten Seite, des Kupplungsdeckels angeordnet. Damit dieses Gegenlager für die im Innenraum der Reibkupplung angeordnete(n) Servofeder(n) zugänglich ist, ist an den entsprechenden Bereichen des Kupplungsdeckels jeweils ein Durchbruch, also beispielsweise insgesamt drei Durchbrüche für drei Auflagezungen der Servofeder, gebildet. Die Auflagezungen ragen somit aus dem Innenraum der Reibkupplung heraus.

Die entsprechenden Auflagezungen der Servofeder(n) bewegen sich über die Lebensdauer, beziehungsweise über den Verschleiß der Reibscheibe, axial nach außen und sind somit bauraumrelevant. Das Einhalten einer Kupplungshüllkontur muss daher geometrisch sichergestellt werden. Hierbei wird weiterhin vorgeschlagen, bei zumindest einem Durchbruch einen Verschleißanschlag zu bilden, gegen welchen die Servofeder nach einer definierten Verschleißreserve anschlägt und nicht weiter belastet werden kann. Beispielsweise bis zu einem Verschleißbereich von mindestens 2 mm [Millimeter] ist es möglich, dies (nahezu) bauraumneutral auszuführen, weil dieser Platz beim Einsatz einer Servofeder in einer konventionellen Konfiguration anstelle dessen ohnehin im Innenraum des Kupplungsdeckels axial vorgehalten werden muss, also lediglich die axiale Lage von Kupplungsdeckel zu Servofeder vertauscht wird.

Gemäß einem weiteren Aspekt der Erfindung wird eine Reibkupplung mit einer Rotationsachse zum lösbaren Verbinden einer Abtriebswelle mit einem Verbraucher vorgeschlagen, welche zumindest die folgenden Komponenten aufweist:
- zumindest ein Reibpaket mit zumindest einer Anpressplatte und zumindest einer korrespondierenden Reibscheibe, über welches im angepressten Zustand ein Drehmoment übertragbar ist;
- zumindest eine Tellerfeder zum Vorhalten einer Tellerfederkraft zum Betätigen der zumindest einen Anpressplatte, wobei die Tellerfeder verkippbar ist;
- einen Kupplungsdeckel, bevorzugt nach einer Ausführungsform gemäß der obigen Beschreibung; und
- zumindest eine Servofeder nach einer Ausführungsform gemäß der obigen Beschreibung, wobei die Servofeder derart angeordnet ist, dass die Servokraft der Tellerfederkraft allein in einem vorbestimmten Winkelbereich der Verkippbarkeit der Tellerfeder entgegenwirkt.

Die Reibkupplung ist dazu eingerichtet, ein Drehmoment lösbar von einer Abtriebswelle auf einen Verbraucher und umgekehrt zu übertragen. Dies wird in der Regel über das zumindest eine Reibpaket erreicht, welches eine axial verschiebbare, in der Regel mit der Abtriebswelle rotationsfeste, Anpressplatte aufweist, welche gegen zumindest eine korrespondierende Reibscheibe pressbar ist. Infolge der Anpresskraft ergibt sich eine Reibkraft über die Reibfläche, welche multipliziert mit dem mittleren Radius der Reibfläche ein übertragbares Drehmoment ergibt. Aufgrund von Verschleiß über die Lebensdauer der Reibkupplung verändert sich die Grundstellung der Tellerfeder, sodass die Ausrückkraft, oder die Einrückkraft, der Tellerfeder zunimmt. Hierfür ist eine Servofeder vorgesehen, welche einer vorbestimmten Winkelstellung der Tellerfeder der Tellerfederkraft mit der Servokraft entgegenwirkt. Mit den Ausführungsformen der vorangehenden beschriebenen Servofeder und einem entsprechend eingerichteten Kupplungsdeckel können die vorangehenden beschriebenen Nachteile der konventionellen Servofeder überwunden werden.

Gemäß am weiteren Aspekt der Erfindung wird ein Antriebsstrang vorgeschlagen, welcher eine Antriebseinheit mit einer Abtriebswelle und eine Reibkupplung nach einer Ausführungsform gemäß der obigen Beschreibung aufweist, wobei die Abtriebswelle zur Drehmomentübertragung mittels der Reibkupplung schaltbar mit zumindest einem Verbraucher verbindbar ist.

Der Antriebsstrang ist dazu eingerichtet, ein von einer Antriebseinheit, zum Beispiel einer Energiewandlungsmaschine, bevorzugt einer Verbrennungskraftmaschine oder einem Elektromotor, bereitgestelltes und über ihre Abtriebswelle abgegebenes Drehmoment für zumindest einen Verbraucher lösbar, also zuschaltbar und abschaltbar, zu übertragen. Ein beispielhafter Verbraucher ist zumindest ein Antriebsrad eines Kraftfahrzeugs und/oder ein elektrischer Generator zur Bereitstellung von elektrischer Energie. Um das Drehmoment gezielt und/oder mittels eines Schaltgetriebes mit unterschiedlichen Übersetzungen zu übertragen beziehungsweise eine Übertragung zu trennen, ist die Verwendung der oben beschriebenen Reibkupplung besonders vorteilhaft, weil eine (nahezu) konstante Betätigungskraft erzeugbar ist, wobei kein zusätzlicher Bauraum benötigt wird und die mechanische Belastung für die Tellerfeder gering ist.

Umgekehrt ist auch eine Aufnahme einer von zum Beispiel einem Antriebsrad eingebrachten Trägheitsenergie umsetzbar. Das zumindest eine Antriebsrad bildet dann die Antriebseinheit, wobei dessen Trägheitsenergie mittels der Reibkupplung auf einen elektrischen Generator zur Rekuperation, also zur elektrischen Speicherung der Bremsenergie, mit einem entsprechend eingerichteten Antriebsstrang übertragbar ist. Weiterhin sind in einer bevorzugten Ausführungsform eine Mehrzahl von Antriebseinheiten vorgesehen, welche mittels der Reibkupplung in Reihe oder parallel geschaltet beziehungsweise voneinander entkoppelt betreibbar sind, beziehungsweise deren Drehmoment jeweils lösbar zur Nutzung zur Verfügung stellbar ist. Beispiele sind Hybridantriebe aus Elektromotor und Verbrennungskraftmaschine, aber auch Mehrzylindermotoren, bei denen einzelne Zylinder (-gruppen) zuschaltbar sind.

Gemäß einem weiteren Aspekt der Erfindung wird ein Kraftfahrzeug vorgeschlagen, welches zumindest ein Antriebsrad aufweist, welches mittels eines Antriebsstrangs gemäß der obigen Beschreibung antreibbar ist.

Die meisten Kraftfahrzeuge weisen heutzutage einen Frontantrieb auf und ordnen daher bevorzugt die Antriebseinheit, beispielsweise eine Verbrennungskraftmaschine oder einen Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden. Ähnlich gestaltet sich der Einsatz einer Reibkupplung in motorisierten Zweirädern, für welche eine deutlich gesteigerte Leistung bei gleichbleibendem Bauraum gefordert wird.

Verschärft wird diese Problematik bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Der oben beschriebene Antriebsstrang weist eine Reibkupplung geringer Baugröße auf. Zugleich sind die Einrückkräfte über die Lebensdauer der Reibkupplung (nahezu) konstant gering, sodass ein Betätigungssystem kleiner Baugröße eingesetzt werden kann. Somit ist insgesamt ein System geringer Baugröße möglich.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo Mito, Volkswagen Polo, Ford Fiesta oder Renault Clio.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein konventioneller Kupplungsdeckel mit einer konventionellen Servofeder im Schnitt bei der Zentrierzunge;
- Fig. 2:: ein konventioneller Kupplungsdeckel mit einer konventionellen Servofeder im Schnitt beim Widerlager;
- Fig. 3:: ein Kupplungsdeckel mit Servofeder im Schnitt bei der Zentrierzunge;
- Fig. 4:: ein Kupplungsdeckel mit Servofeder im Schnitt beim Widerlager;
- Fig. 5:: eine Reibkupplung mit Servofeder im Schnitt beim Widerlager;
- Fig. 6:: eine Servofeder in deckelseitiger Ansicht;
- Fig. 7:: eine Servofeder in anpressplattenseitiger Ansicht;
- Fig. 8:: ein Kupplungsdeckel mit Sicken in anpressplattenseitiger Ansicht;
- Fig. 9:: ein Kupplungsdeckel mit Zecken in außenseitiger Ansicht; und
- Fig. 10:: ein Antriebsstrang in einem Kraftfahrzeug mit Reibkupplung.

In Fig. 1 ist ein Kupplungsdeckel 14 mit einem Widerlagerabschnitt 17 und einem angeschnittenen Anbindungsabschnitt 15 gezeigt, bei welcher über einen Stufenbolzen 46 eine Tellerfeder 4 mit einem äußeren Anpressabschnitt 51 und einem inneren Betätigungsabschnitt 50 mittels eines ersten Drahtrings 47 axial gelagert ist. In dieser Schnittansicht in einem ersten Winkel bezogen auf die Rotationsachse 24 des Kupplungsdeckels 14 ist eine konventionelle Servofeder 38 mit einer konventionellen Zentrier-Auflagezunge 40 dargestellt, welches auf einem konventionellen Gegenlager 45, welches vom Stufenbolzen 46 gebildet wird, axial gelagert ist. Zum Zentrieren ist die konventionelle Zentrier-Auflagezunge 40 radial gegen die Radialführung 34 des Stufenbolzens 46 gelagert. Eine konventionelle Widerlagerzunge 43 ist axial gegen eine Widerlagererhebung 49 des Widerlagerabschnitts 17 des Kupplungsdeckels 14 abgestützt. Die Servokraft wird mittels eines konventionellen Federabschnitts 39 vorgehalten.

In Fig. 2 ist ein Kupplungsdeckel 14, wie er in Fig. 1 dargestellt ist um die Rotationsachse 24 im Schnitt leicht gedreht in einem zweiten Winkel dargestellt, sodass das konventionelle Blechende 42 beim konventionellen Kontaktbereich 41 der konventionellen Servofeder 38 zu sehen ist. Hierbei stützt sich die konventionelle Widerlagerzunge 43 an einem gezogenen konventionellen Auflageradius 44 ab, sodass ein großer Abrollradius gebildet ist. Hierdurch verändert sich der Hebelarm der Servofeder 38 sehr stark.

In Fig. 3 ist ein Kupplungsdeckel 14 in einem ersten Winkel bezogen auf die Rotationsachse 24 im Schnitt mit einem Widerlagerabschnitts 17 und einem angeschnittenen Anbindungsabschnitt 15 gezeigt, welcher eine (nahezu) konstante Dicke 22 aufweist. Auch hier ist eine Tellerfeder 4 vorgesehen, welche außenseitig einen Anpressabschnitt 51 innenseitig bei der Rotationsachse 24 einen Betätigungsabschnitt 50 aufweist. Die Tellerfeder 4 hierbei mittels eines ersten Drahtrings 47 und eines zweiten Drahtrings 48 mithilfe eines Stufenbolzens 46 beim Widerlagerabschnitt 17 des Kupplungsdeckels 14 axial abgestützt. Die Servofeder 1 weist hierbei einen Federabschnitt 3 auf, an welchen sich eine Zentrierzunge 10 und eine Widerlagerzunge 5 anschließt. Mittels der Widerlagerzunge 5 ist die Servofeder 1 an einem axialen Widerlager 6 abgestützt, welches auch durch einen Drahtring gebildet sein kann, hier aber als Auflagererhebung 19 durch eine Sicke 20 gebildet ist. Die Zentrierzunge 10 ist hierbei wie die konventionelle Zentrier-Auflagezunge 40 (vergleiche Fig. 1) an der Radialführung 34 des Stufenbolzens 46 radial abstützbar. Die Zentrierzunge 10 ist aber nicht dazu eingerichtet, auf einem Gegenlager axial abgestützt zu werden. Damit ist der radiale Abstand zwischen Stufenbolzen 46 und der Servofeder 1 in einem weiteren Toleranzbereich als konventionell möglich ausführbar.

In Fig. 4 ist ein Kupplungsdeckel 14, wie er in Fig. 3 dargestellt ist um die Rotationsachse 24 leicht gedreht in einem zweiten Winkel im Schnitt dargestellt, sodass hier die Auflagezunge 8 zu sehen ist, welche sich durch einen Durchbruch 23 im Widerlagerabschnitts 17 des Kupplungsdeckels 14 erstreckt und auf einem Gegenlager 9, welches rückseitig des Kupplungsdeckels 14 gebildet ist, aufliegt und insoweit auf eine maximale Winkellage gemäß des dargestellten Winkelbereichs 30 begrenzt ist. Erst bei einem Aufstellen der Tellerfeder 4 um den Verkipppunkt bei dem zweiten Drahtring 48 wird die Servokraft der Servofeder 1 für die Betätigungskraft auf den Betätigungsabschnitt 50 der Tellerfeder 4 wirksam. In der entgegengesetzten Richtung ist die Auslenkung der Servofeder 1 beispielsweise durch die Abmessungen des Durchbruchs 23 begrenzbar. Hier ist die Tellerfeder 4 in einer Stellung gezeigt, bei welcher sie gerade an dem Kontaktbereich 7 anliegt und zugleich die Auflagezunge 8 noch auf dem Gegenlager 9 aufliegt. Die Widerlagerzunge 5 liegt hier an der geschnitten dargestellten Sicke 20 an, welche einen besonders geringen Auflageradius 21 aufweist, sodass sich der Hebelarm der Servofeder 1 über die Verkippung über den Winkelbereich 30 deutlich weniger verändert. Im Vergleich zu Fig. 3 ist hierbei zu erkennen, dass die Auflagezunge 8 einen größeren Außenradius 11 aufweist als der Innenradius 12 der Zentrierzunge 10. Hierdurch ist eine größere Toleranz für die Fertigung der Servofeder 1 akzeptabel.

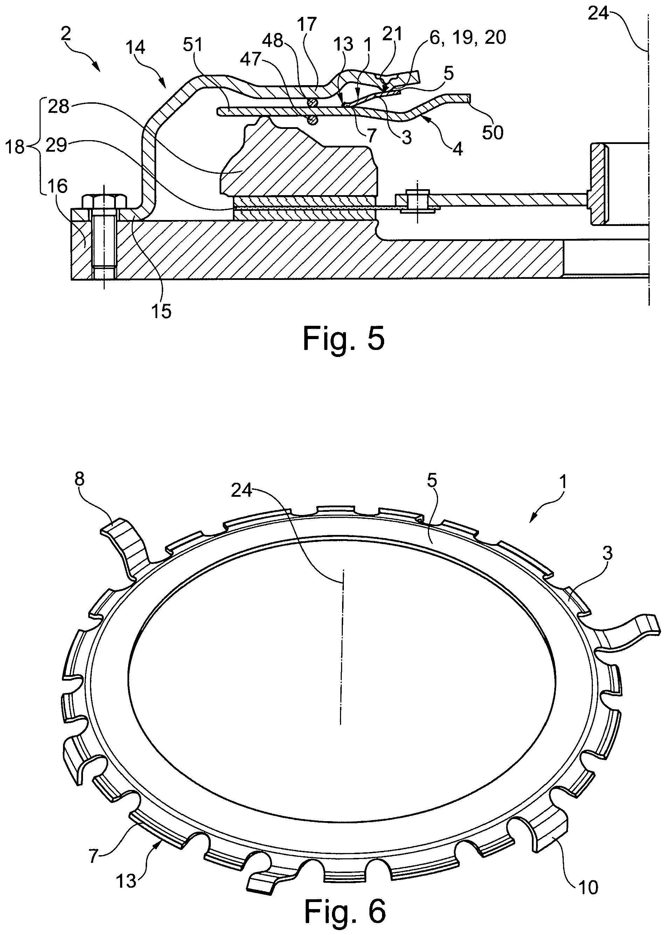

In Fig. 5 ist eine Reibkupplung 2 mit einem Kupplungsdeckel 14, wie er in Fig. 3 und Fig. 4 dargestellt ist, leicht gedreht in einem dritten Winkel im Schnitt gezeigt, sodass hier der Kontaktbereich 7 mit dem Blechende 13, welches von der Tellerfeder 4 weg gerichtet ist zu erkennen ist. Es sei dabei darauf hingewiesen, dass der Kontaktbereich 7 bevorzugt auch bei der Auflagezunge 8 gebildet ist. In dieser Darstellung der Reibkupplung 2 ist das Reibpaket 18 in seiner Beziehung zur Tellerfeder 4 zu erkennen. Hierbei ist eine normal eingerückte Reibkupplung 2 gezeigt, bei welcher sich die gedrückt zu betätigende Tellerfeder 4 ohne Betätigung an dem Betätigungsabschnitt 50 aufstellt, sodass der Anpressabschnitt 51 die Anpressplatte 28 gegen die Gegenplatte 16 presst, sodass eine dazwischen angeordneten Reibscheibe 29 eingeklemmt wird und somit ein Drehmoment um die Rotationsachse 24 reibschlüssigen von der Gegenplatte 16 und dem Kupplungsdeckel 14 auf die Reibscheibe 29 übertragbar ist. Wird hingegen eine Betätigungskraft in dieser Darstellung von oben nach unten auf den Betätigungsabschnitt 50 aufgebracht, wird der Anpressabschnitt 51 der Tellerfeder 4 von der Anpressplatte 28 abgehoben, sodass der Reibschluss der Anpressplatte 28 und der Gegenplatte 16 mit der Reibscheibe 29 aufgehoben wird. Nimmt nun die Dicke der Reibscheibe 29 ab, so stellt sich die Tellerfeder 4 stärker auf, sodass die Servofeder 1 belastet wird und der Tellerfeder 4 entgegenwirkt. Somit unterstützt die Servokraft dann die Betätigungskraft entgegen der Tellerfederkraft.

In Fig. 6 ist eine bevorzugte Ausführungsform einer Servofeder 1 in deckelseitiger Ansicht, also bezogen auf die Darstellung in Fig. 5 von oben, gezeigt, bei welcher der Federabschnitt 3 und die Widerlagerzunge 5 umlaufend um die Rotationsachse 24 gebildet sind. Die Servofeder 1 weist drei Auflagezungen 8, sowie drei separate Zentrierzungen 10 auf, wie sie beispielsweise in Fig. 3 und Fig. 4 im Schnitt dargestellt sind. Des Weiteren sind eine Mehrzahl von Zungen zur Ausbildung von Kontaktbereichen 7 vorgesehen, welche jeweils ein weg gerichtetes Blechende 13 aufweisen.

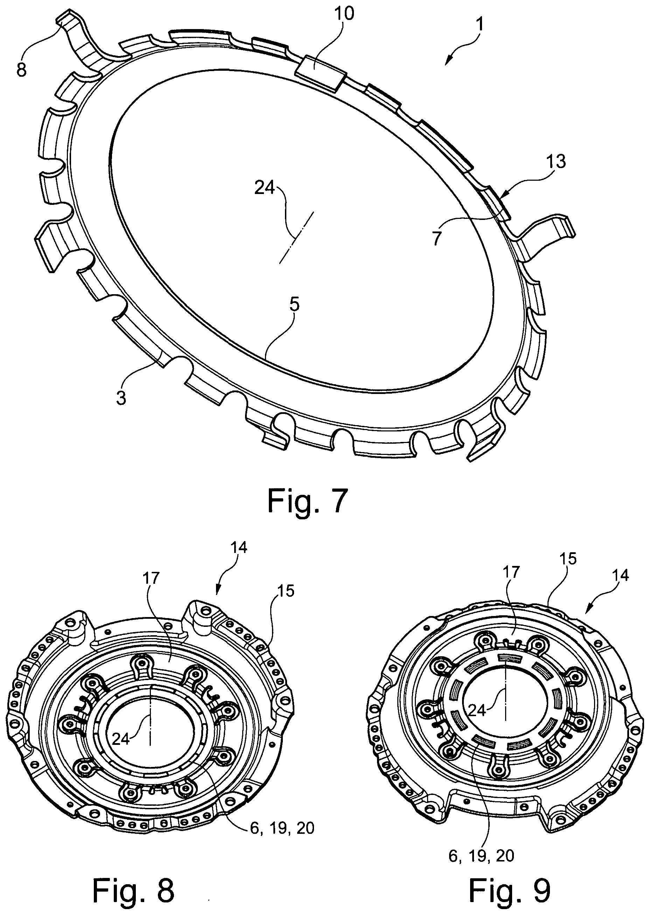

In Fig. 7 ist die gleiche Ausführungsform einer Servofeder 1 wie in Fig. 6 dargestellt, wobei hier die anpressplattenseitige Ansicht, also bezogen auf die Darstellung in Fig. 5 von unten, gezeigt ist.

In Fig. 8 ist ein Kupplungsdeckel 14 vom Innenraum her gezeigt, also bezogen auf die Darstellung in Fig. 5 von unten. Hierbei sind neben dem Anbindungsabschnitt 15, hier mittels Verschraubung oder Vernietung zum Beispiel mit einer Gegenplatte 16 (vergleiche Fig. 5), der Widerlagerabschnitt 17 gezeigt, welcher eine Mehrzahl von axialen Widerlagern 6, welche gleichmäßig über den Umfang verteilt sind, aufweist, die hier einstückig als Auflagererhebung 19 mittels Sicken 20 gebildet sind.

In Fig. 9 ist der Kupplungsdeckel 14 von außen her gezeigt, also bezogen auf die Darstellung in Fig. 5 von oben, wie er in Fig. 8 dargestellt ist. Hierbei sind die gebildeten Sicken 20 rückseitig zu erkennen. Weiterhin sind die Gegenlager 9 zu sehen, welche rückseitig, also außenseitig, des Kupplungsdeckels 14 gebildet sind und mittels Durchbrüchen 23 für Auflagezungen 8, beispielsweise wie in Fig. 6 und Fig. 7 dargestellt, zugänglich sind.

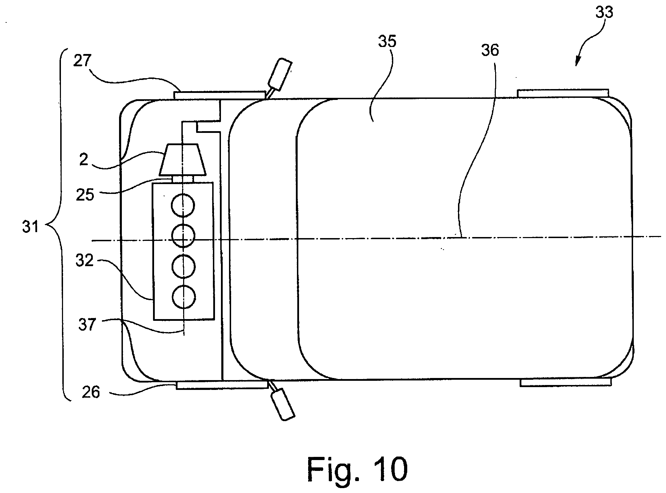

In Fig. 10 ist ein Antriebsstrang 31, umfassend eine Antriebseinheit 32, hier als Verbrennungskraftmaschine dargestellt, eine Abtriebswelle 25, eine Reibkupplung 2 und ein drehmomentübertragend verbundenes linkes Antriebsrad 26 und rechtes Antriebsrad 27, schematisch dargestellt. Der Antriebsstrang 31 ist hier in einem Kraftfahrzeug 33 angeordnet, wobei die Antriebseinheit 32 mit ihrer Motorachse 37 quer zur Längsachse 36 vor der Fahrerkabine 35 angeordnet ist.

Mit der hier vorgeschlagenen Servofeder und einem korrespondierenden Kupplungsdeckel wird eine längere Lebensdauer der Tellerfeder und größere Fertigungstoleranz bei gleichem Bauraumbedarf erreicht.

### Bezugszeichenliste

- 1: Servofeder
- 2: Reibkupplung
- 3: Federabschnitt
- 4: Tellerfeder
- 5: Widerlagerzunge
- 6: axiales Widerlager
- 7: Kontaktbereich
- 8: Auflagezunge
- 9: Gegenlager
- 10: Zentrierzunge
- 11: Außenradius
- 12: Innenradius
- 13: Blechende
- 14: Kupplungsdeckel
- 15: Anbindungsabschnitt
- 16: Gegenplatte
- 17: Widerlagerabschnitt
- 18: Reibpaket
- 19: Auflagererhebung
- 20: Sicke
- 21: Auflageradius
- 22: Dicke
- 23: Durchbruch
- 24: Rotationsachse
- 25: Abtriebswelle
- 26: linkes Antriebsrad
- 27: rechtes Antriebsrad
- 28: Anpressplatte
- 29: Reibscheibe
- 30: Winkelbereich
- 31: Antriebsstrang
- 32: Antriebseinheit

## Patentansprüche

1. Reibkupplung (2) mit einer Rotationsachse (24) zum lösbaren Verbinden einer Abtriebswelle (25) mit einem Verbraucher (26,27), wobei die Reibkupplung (2) zumindest die folgenden Elemente aufweist:
- zumindest ein Reibpaket (18) mit zumindest einer Anpressplatte (28) und zumindest einer korrespondierenden Reibscheibe (29), über welches im angepressten Zustand ein Drehmoment übertragbar ist;
- zumindest eine Tellerfeder (4) zum Vorhalten einer Tellerfederkraft zum Betätigen der zumindest einen Anpressplatte (28), wobei die Tellerfeder (4) verkippbar ist;
- zumindest eine Servofeder (1), welche derart angeordnet ist, dass die Servokraft der Tellerfederkraft allein in einem vorbestimmten Winkelbereich der Verkippbarkeit der Tellerfeder (4) entgegenwirkt; und
- einen Kupplungsdeckel (14), welcher zumindest die folgenden Komponenten aufweist:
- einen Anbindungsabschnitt (15) zum axialen Fixieren des Kupplungsdeckels (14) mit einem axial fixierten mitrotierenden Bauteil (16) einer Reibkupplung (2);
- einen Widerlagerabschnitt (17) zur Aufnahme einer axialen Anpresskraft und Betätigungskraft für ein drehmomentübertragendes Reibpaket (18),
**dadurch gekennzeichnet, dass**
die Servofeder (1) eine Auflagezunge (8) zur axialen Wegbegrenzung aufweist,
die sich durch einen Durchbruch (23) im Widerlagerabschnitt (17) des Kupplungsdeckels (14) erstreckt, und auf einem Gegenlager (9), welches rückseitig des Kupplungsdeckels (14) gebildet ist, aufliegt.

2. Reibkupplung (2) nach Anspruch 1, wobei das Gegenlager (9) mittels des Durchbruchs (23) im Widerlagerabschnitt (17) gebildet ist.

3. Reibkupplung (2) nach Anspruch 2, wobei beim Durchbruch (23) ein Verschleißanschlag gebildet ist, gegen welchen die Servofeder (1) nach einer definierten Verschleißreserve anschlägt und dann nicht weiter belastet werden kann.

4. Reibkupplung nach einem der Ansprüche 1 bis 3, wobei der Widerlagerabschnitt (17) eine Auflagererhebung (19) aufweist, wobei die Auflagererhebung (19) zur Auflage einer Widerlagerzunge (5) einer Servofeder (1) eingerichtet ist, wobei der Kupplungsdeckel (14) aus einem Blechmaterial gebildet ist, und wobei die Auflagererhebung (19) mittels einer Sicke (20) mit einem Auflageradius (21) gebildet ist, der geringer als die Dicke (22) des Materials des Kupplungsdeckels (14) ist.

5. Antriebsstrang (31), aufweisend eine Antriebseinheit (32) mit einer Abtriebswelle (25) und eine Reibkupplung (2) nach einem der vorhergehenden Ansprüche, wobei die Abtriebswelle (25) zur Drehmomentübertragung mittels der Reibkupplung (2) schaltbar mit zumindest einem Verbraucher (26,27) verbindbar ist.

6. Kraftfahrzeug (33), aufweisend zumindest ein Antriebsrad (26,27), welches mittels eines Antriebsstrangs (31) nach Anspruch 5 antreibbar ist.

## Claims

1. Friction clutch (2) having a rotational axis (24) for the releasable connection of an output shaft (25) to a consumer (26, 27), the friction clutch (2) having at least the following elements:
- at least one friction package (18) with at least one pressure plate (28) and at least one corresponding friction disc (29), via which friction package (18) a torque can be transmitted in the pressed-on state;
- at least one cup spring (4) for storing a cup spring force for the actuation of the at least one pressure plate (28), it being possible for the cup spring (4) to be tilted;
- at least one servo spring (1) which is arranged in such a way that the servo force counteracts the cup spring force solely in a predefined angular range of the tilting capability of the cup spring (4); and
- a clutch cover (14) which has at least the following components:
- an attaching section (15) for axially fixing the clutch cover (14) to an axially fixed co-rotating component (16) of a friction clutch (2);
- an abutment section (17) for absorbing an axial pressing force and actuating force for a torquetransmitting friction package (18),
**characterized in that**
the servo spring (1) has a supporting tongue (8) for axial travel limiting, which supporting tongue (8) extends through an aperture (23) in the abutment section (17) of the clutch cover (14), and lies on a counterbearing (9) which is formed on the rear side of the clutch cover (14).

2. Friction clutch (2) according to Claim 1, the counterbearing (9) being formed by means of the aperture (23) in the abutment section (17).

3. Friction clutch (2) according to Claim 2, a wear stop being formed at the aperture (23), against which wear stop the servo spring (1) bears after a defined wear reserve and then cannot be loaded further.

4. Friction clutch according to one of Claims 1 to 3, the abutment section (17) having a supporting elevation (19), the supporting elevation (19) being set up to support an abutment tongue (5) of a servo spring (1), the clutch cover (14) being formed from a sheet metal material, and the supporting elevation (19) being formed by means of a bead (20) with a supporting radius (21) which is smaller than the thickness (22) of the material of the clutch cover (14).

5. Drive train (31), having a drive unit (32), with an output shaft (25), and a friction clutch (2) according to one of the preceding claims, it being possible for the output shaft (25) to be connected by means of the friction clutch (2) in a switchable manner to at least one consumer (26, 27) for the transmission of torque.

6. Motor vehicle (33), having at least one drive wheel (26, 27) which can be driven by means of a drive train (31) according to Claim 5.

## Revendications

1. Embrayage à friction (2) comprenant un axe de rotation (24) pour la connexion amovible d'un arbre de prise de force (25) à un consommateur (26, 27), l'embrayage à friction (2) présentant au moins les éléments suivants :
- au moins un paquet de friction (18) avec au moins un plateau de pressage (28) et au moins un disque de friction correspondant (29) par le biais duquel, dans l'état pressé, un couple peut être transmis ;
- au moins un ressort Belleville (4) pour stocker une force de ressort Belleville pour l'actionnement de l'au moins un plateau de pressage (28), le ressort Belleville (4) pouvant être basculé ;
- au moins un ressort à force d'assistance (1) qui est disposé de telle sorte que la force d'assistance s'oppose à la force du ressort Belleville seulement dans une plage angulaire prédéterminée de basculement du ressort Belleville (4) ; et
- un couvercle d'embrayage (14) qui présente au moins les composants suivants :
- une portion de liaison (15) pour la fixation axiale du couvercle d'embrayage (14) à un composant (16) fixé axialement, tournant conjointement, d'un embrayage à friction (2) ;
- une portion de butée (17) pour recevoir une force de pressage axiale et une force d'actionnement pour un paquet de friction transmettant le couple (18),
**caractérisé en ce que**
le ressort à force d'assistance (1) présente une langue d'appui (8) pour la limitation de course axiale, qui s'étend à travers un orifice (23) dans la portion de butée (17) du couvercle d'embrayage (14), et repose sur une contre-butée (9) qui est formée du côté arrière du couvercle d'embrayage (14) .

2. Embrayage à friction (2) selon la revendication 1, dans lequel la contre-butée (9) est formée au moyen de l'orifice (23) dans la portion de butée (17) .

3. Embrayage à friction (2) selon la revendication 2, dans lequel une butée d'usure est formée au niveau de l'orifice (23), contre laquelle le ressort à force d'assistance (1) vient buter avec une réserve d'usure définie et ne peut ensuite plus être sollicité davantage.

4. Embrayage à friction selon l'une quelconque des revendications 1 à 3, dans lequel la portion de butée (17) présente un rehaussement d'appui (19), le rehaussement d'appui (19) étant prévu pour supporter une langue de butée (5) d'un ressort à force d'assistance (1), le couvercle d'embrayage (14) étant formé d'un matériau en tôle et le rehaussement d'appui (19) étant formé au moyen d'une moulure (20) avec un rayon d'appui (21) qui est inférieur à l'épaisseur (22) du matériau du couvercle d'embrayage (14).

5. Chaîne cinématique (31), présentant une unité d'entraînement (32) avec un arbre de prise de force (25) et un embrayage à friction (2) selon l'une quelconque des revendications précédentes, dans laquelle l'arbre de prise de force (25) peut être connecté pour le transfert de couple au moyen de l'embrayage à friction (2) de manière commutable à au moins un consommateur (26, 27).

6. Véhicule automobile (33), présentant au moins une roue d'entraînement (26, 27) qui peut être entraînée au moyen d'une chaîne cinématique (31) selon la revendication 5.
